# EUROPÄISCHE PATENTSCHRIFT

(11) **EP 3 724 528 B1**
(45) Veröffentlichungstag und Bekanntmachung des Hinweises auf die Patenterteilung: **14.06.2023**
(21) Anmeldenummer: 18857385.1
(22) Anmeldetag: 21.11.2018
(51) Int. Cl.: F16D 13/76, B60K 6/387, F16D 25/08

(54) **HYBRIDMODUL MIT ACHSPARALLELEM ZWEITEN ANTRIEBSAGGREGAT UND ANTRIEBSSTRANG**
HYBRID MODULE WITH AXIALLY PARALLEL SECOND DRIVE UNIT AND DRIVE TRAIN
MODULE HYBRIDE AVEC DEUXIEME GROUPE D'ENTRAINEMENT PARALLELE A L'AXE ET DEUXIEME GROUPE MOTOPROPULSEUR

(30) Priorität: 12.12.2017 DE 102017129566; 14.02.2018 DE 102018103255
(43) Veröffentlichungstag der Anmeldung: 21.10.2020
(73) Patentinhaber: Schaeffler Technologies AG & Co. KG, 91074 Herzogenaurach (DE)
(72) Erfinder: LAIGO, Jonathan, 67100 Strasbourg (DE); LEHMANN, Steffen, 76275 Ettlingen (DE)
(86) Internationale Anmeldenummer: PCT/DE2018/100949
(87) Internationale Veröffentlichungsnummer: WO 2019/114860

(56) Entgegenhaltungen:
- WO-A1-2017/129165
- DE-A1-102007 024 126
- DE-A1-102014 213 818
- DE-A1-102014 213 818
- DE-A1-102015 225 421
- DE-A1-102015 225 422
- DE-A1-102015 225 422
- DE-T2-602005 001 625
- DE-T2-602005 001 625

## Beschreibung

Die Erfindung betrifft ein Hybridmodul für einen Antriebsstrang eines Kraftfahrzeugs, mit einem Drehmomenteingangsbauteil, das vorgesehen ist, um von einem ersten Antriebsaggregat, wie einer Verbrennungskraftmaschine oder einer Elektromaschine/elektrischen Maschine, angetrieben zu werden, mit einem im Drehmomentenfluss nachgelagerten, als Abtriebselement wirkenden Drehmomentausgangsbauteil, wobei das Drehmomenteingangsbauteil und das Drehmomentausgangsbauteil über eine schaltbare Kupplung, insbesondere eine Trennkupplung, bevorzugt eine Impulskupplung, drehmomentübertragend verbindbar sind, und mit einem Drehschwingungsdämpfer/Torsionsschwingungsdämpfer zum Reduzieren von Drehungleichförmigkeiten, der der schaltbaren Kupplung, insbesondere direkt im Antriebsstrang, im Drehmomentenfluss nachgelagert ist, das heißt, dass die schaltbare Kupplung getriebeseitig angeordnet ist, ergo zwischen dem Drehmomentausgangsbauteil und einem Getriebeeingangsbauteil angeordnet ist. Weiterhin betrifft die Erfindung einen Antriebsstrang für ein Kraftfahrzeug, mit einem ersten Antriebsaggregat, dessen Abtriebswelle über ein solches Hybridmodul mit einem Endloszugmittelträger verbindbar ist, wobei der Endloszugmittelträger über ein Endloszugmittel mit einem achsparallel zu dem Endloszugmittelträger und/oder der Abtriebswelle des erstes Antriebsaggregats angeordneten zweiten Antriebsaggregat drehmomentübertragend gekoppelt ist, und mit einer Doppelkupplung, die im Drehmomentenfluss dem Hybridmodul nachgelagert ist.

Aus dem Stand der Technik sind bereits Hybridmodule bekannt. Zum Beispiel wird bei der DQ200h ein Hybridmodul eingesetzt, bei der ein Drehmomenteingangsbauteil über eine Impulskupplung mit einem Drehmomentausgangsbauteil verbunden ist. Dabei dient der Rotor einer koaxial angeordneten E-Maschine als das Drehmomentausgangsbauteil. Üblicherweise ist bei solchen Impulskupplungen der Dämpfer der Impulskupplung nachgeschaltet. Bei solchen Hybridmodulen, bei denen die E-Maschine koaxial angeordnet ist, ist es jedoch oftmals schwierig, das Hybridmodul einfach montieren zu können und ein bauraumeffizientes Hybridmodul bereitstellen zu können.

Ein Hybridmodul gemäß dem Oberbegriff des Anspruchs 1 ist aus jeder der WO 2017/129165 A1, der DE 10 2014 213 818 A1, der DE 10 2015 225 422 A1, der DE 10 2015 225 421 A1 und der DE 60 2005 001 625 T2 bekannt.

Es ist also die Aufgabe der Erfindung, die Nachteile aus dem Stand der Technik zu vermeiden oder wenigstens zu verringern. Insbesondere soll ein Hybridmodul bereitgestellt werden, dass bauraumeffizient ausgelegt ist, eine einfache Montage ermöglicht und gleichzeitig die Funktionalität eines bestehenden Getriebes unverändert erfüllt.

Die Aufgabe der Erfindung wird bei einem Hybridmodul gemäß Anspruch 1 gelöst.

Dies hat den Vorteil, dass durch die achsparallele Anordnung der E-Maschine ein großer Teil an benötigtem axialem Bauraum eingespart werden kann, und der Bauraum in einem radial äußeren Bereich besser für notwendige Bauteile genutzt werden kann. Außerdem wird so ermöglicht, dass das Hybridmodul einfacher montiert werden kann, was unter anderem den Austausch von Verschleißbauteilen oder Wartungsbauteilen ermöglicht.

Vorteilhafte Ausführungsformen werden in den Unteransprüchen beansprucht und werden nachfolgend näher erläutert.

Zudem ist es vorteilhaft, wenn ein Kupplungsbetätigungssystem zum Betätigen der schaltbaren Kupplung vorhanden ist, das eine etwa durch eine axiale Verschiebung eines axial verschieblichen Ausrücklagers schwenkbare Hebelfeder besitzt, mittels der ein Verstellen, also ein Öffnen und Schließen, der schaltbaren Kupplung bewirkbar ist, etwa durch Einsatz einer durch Verschwenkung der Hebelfeder axial entgegen der Antriebskraft einer Tellerfeder verschieblichen Anpressplatte, wobei die Hebelfeder mehrteilig ausgebildet ist. Dadurch wird vorteilhafterweise ermöglicht, dass die Hebelfeder einfacher, insbesondere radial innerhalb des Endloszugmittelträgers, montiert werden kann. Es wirkt sich als ins besondere günstig auf die Montagereihenfolge aus.

Ferner ist es zweckmäßig, wenn die Hebelfeder mehrere Einzel-Hebelfedern aufweist, die über eine Halteplatte miteinander verbunden, vorzugsweise vernietet, sind. So ist es also möglich, zuerst die Halteplatte in dem Hybridmodul zu montieren, und anschließend die Einzel-Hebelfedern an der Halteplatte durch Vernieten, Verschrauben oder ähnliches zu befestigen.

Außerdem ist es vorteilhaft, wenn die schalbare Kupplung zumindest eine Kupplungsscheibe aufweist, die über ein Adapterbauteil fest, aber lösbar, mit dem Drehmomenteingangsbauteil verbunden ist. So wird die Kupplungsscheibe vorteilhafterweise direkt an dem Drehmomenteingangsbauteil angebunden, was sich vorteilhaft auf den benötigten Bauraum auswirkt.

Zudem ist es bevorzugt, wenn die zumindest eine Kupplungsscheibe so angeordnet ist, dass sie einen Freigang aufweist, das heißt, dass sie beispielweise über eine Flexplate und Zusatzschrauben oder aber über Unterlegscheiben in ihrer Höhe eingestellt werden kann. Dadurch können also die Höhentoleranzen im Neuzustand abgeglichen werden.

Ferner ist es zweckmäßig, wenn das Adapterbauteil über ein Trägerbauteil mit der Kupplungsscheibe verbunden ist, wobei das Adapterbauteil und das Trägerbauteil über eine formschlüssige Verbindung zur Drehmomentübertragung verbunden sind. So wird die Drehmomentübertragung von dem Drehmomenteingangsbauteil an die Kupplungsscheibe zum Übertragen des Drehmoments an das Drehmomentausgangsbauteil sichergestellt, wobei gleichzeitig nur wenige Bauteile benötigt werden, um die Kupplungsscheibe und das Drehmomenteingangsbauteil möglichst bauraumsparend zu verbinden.

Besonders bevorzugt ist es, wenn die formschlüssige Verbindung zum Verbinden des Adapterbauteils mit dem Trägerbauteil als eine Hirth-Verzahnung ausgebildet ist. Diese ist besonders kostengünstig herstellbar. Es kann aber auch eine andere Verbindungsart, wie eine Kerbverzahnung, oder eine andere Welle-Nabe-Verbindung verwendet werden.

Weiterhin zeichnet sich ein günstiges Ausführungsbeispiel dadurch aus, dass das Adapterbauteil und das Trägerbauteil über eine Zentralschraube in Axialrichtung relativ zueinander festgelegt sind. Da eine Hirth-Verzahnung eine axiale Festlegung der Bauteile zueinander bietet, ist also eine zusätzliche Festlegung der Bauteile in Axialrichtung notwendig, um eine ausreichende Übertragung des Drehmoments sicherstellen zu können.

Ferner ist es von Vorteil, wenn das Adapterbauteil an dem Drehmomenteingangsbauteil vormontiert ist, was sich günstig auf die Montagereihenfolge und die Austauschbarkeit der wartungsintensiven Bauteile auswirkt.

Insbesondere ist es von Vorteil, wenn das Adapterbauteil dabei an das Drehmomenteingangsbauteil geschraubt wird, beispielsweise durch eine konventionelle Schraubverbindung. So wird eine kostengünstige Lösung zur Befestigung der Kupplungsscheibe an dem Drehmomenteingangsbauteil sichergestellt.

Zusätzlich ist es zweckmäßig, wenn eine Anpressplatte zum Betätigen der Kupplung mehrteilig ausgebildet ist, etwa in einen Hebelfederkontaktteil, ein Blattfederpaket und ein davon separates Reibbelagkontaktteil unterteilt ist. Dadurch wird sichergestellt, dass die Anpressplatte in dem Hybridmodul montiert werden kann.

Dabei ist es von Vorteil, wenn das Reibbelagkontaktteil in einem radial äußeren Bereich, stirnseitig zum Kontaktieren eines Reibbelags der Kupplungsscheibe vorgesehen ist.

Außerdem ist es zweckmäßig, wenn das Blattfederpaket in einem radial inneren Bereich der Anpressplatte angeordnet ist. Das Blattfederpaket dient dazu, in einem Fall, in dem die Reibbelege verschlissen sind, eine ebene Kontaktierung der Anpressplatte mit den Kupplungsscheiben sicherzustellen, so dass eine ausreichende Drehmomentübertragung sichergestellt wird.

Außerdem ist es bevorzugt, wenn das Hebelfederkontaktteil so ausgebildet und angeordnet ist, dass es die Hebelfeder hintergreift. So kann eine Realisierung der schaltbaren Kupplung als eine Normally-Closed-Kupplung sichergestellt werden.

Außerdem ist es von Vorteil, wenn das Reibbelagkontaktteil und das Blattfederpaket, vorzugsweise in einem radial inneren Bereich, vernietet sind. Auch ist es von Vorteil, wenn das Reibbelagkontaktteil und das Hebelfederkontaktteil, vorzugsweise in einem radial äußeren Bereich, also radial außerhalb der Vernietung zwischen dem Reibbelagkontaktteil und dem Blattpaket, vernietet sind.

Zudem ist es vorteilhaft, wenn der Drehschwingungsdämpfer zum zentrumsnahen, das heißt innerhalb der Hebelfeder in Radialrichtung angeordnet, Befestigen an einem Getriebeeingangsbauteil vorgesehen ist.

Erfindungsgemäß stehen der Drehschwingungsdämpfer und der Endloszugmittelträger direkt miteinander unter Ausbildung einer Befestigungsstelle, beispielweise radial außerhalb des Zentrums, also radial außerhalb der Befestigung des Drehschwingungsdämpfers an einem Getriebeeingangsbauteil, aber radial innerhalb des Außendurchmessers des Endloszugmittelträgers in Kontakt. Insbesondere ist es auch von Vorteil, wenn der Drehschwingungsdämpfer und der Endloszugmittelträger an der Befestigungsstelle vorvernietet sind, sodass ein gemeinsamer Ausbau erleichtert wird.

Die Aufgabe der Erfindung wird auch durch einen Antriebsstrang für ein Kraftfahrzeug, mit einem ersten Antriebsaggregat, wie zum Beispiel einer Verbrennungskraftmaschine oder einer E-Maschine, dessen Abtriebswelle über ein erfindungsgemäßes Hybridmodul mit einer Abtriebswelle eines zweiten Antriebsaggregats, wie einer E-Maschine, verbunden ist, und mit einer Doppelkupplung, die im Drehmomentenfluss den erfindungsgemäßen Hybridmodul nachgelagert ist. Mit anderen Worten betrifft die Erfindung auch einen Antriebsstrang für ein Kraftfahrzeug, mit einem ersten Antriebsaggregat, dessen Abtriebswelle über ein solches Hybridmodul mit einem Endloszugmittelträger verbindbar ist, wobei der Endloszugmittelträger über ein Endloszugmittel mit einem achsparallel zu dem Endloszugmittelträger und/oder der Abtriebswelle des erstes Antriebsaggregats angeordneten zweiten Antriebsaggregat drehmomentübertragend gekoppelt ist, und mit einer Doppelkupplung, die im Drehmomentenfluss dem Hybridmodul nachgelagert ist

Außerdem ist es von Vorteil, wenn der Drehschwingungsdämpfer im Drehmomentenfluss zwischen dem Hybridmodul und der Doppelkupplung angeordnet ist.

Mit anderen Worten betrifft die Erfindung eine Impuls-Trennkupplung für ein achsparalleles Hybridmodul. Dabei wird ein kompaktbauendes und kostengünstiges Hybridmodul bereitgestellt. Eine bevorzugt als Normally-Closed-Impulstrennkupplung ausgebildete Kupplung wird an eine achsparallele E-Maschine durch einen Riemen oder eine Kette gekoppelt. Eine Kopplungsscheibe ist mit einem Adapterelement über ein Trägerbauteil verbunden, indem eine Hirth-Verzahnung und/oder eine Zentralschraube verwendet werden. Das Adapterelement/Adapterbauteil ist an einer Kurbelwelle eines ersten Antriebsaggregats durch eine Schraubverbindung vormontiert. Die Kupplungsscheibe ist also direkt an der Kurbelwelle befestigt und zusammen mit dem Drehschwingungsdämpfer, der der Kupplung nachgelagert ist, ergibt sich eine besonders kompaktbauende Lösung. Dabei ist es auch möglich das Adapterbauteil entfallen zu lassen und die Hirth-Verzahnung und die Gewindebohrung direkt auf der Kurbelwelle anzubringen.

Es wird also ein Hybridmodul für eine P2-Hybridanwendung bereitgestellt, bei der eine Normally-Closed-Kupplung verwendet wird, die als eine Impulskupplung ausgebildet ist, das heißt, dass ein Zuschalten der Verbrennungskraftmaschine während eines elektromotorischen Betriebs ermöglicht ist. Die Kupplung ist mit dem achsparallelen E-Motor, insbesondere einem 48 Voltmotor oder einem Hochvoltmotor, über einen Keil-, Zahnriemen oder eine Kette verbunden. Eine Kupplungsscheibe weist geklebte Belege auf und ist über ein Trägerteil an dem Adapterteil/Adapterbauteil durch eine Hirth-Verzahnung und eine Zentralschraube befestigt. Dieses Adapterteil ist selbst an der Kurbelwelle der Verbrennungskraftmaschine über eine konventionelle Schraubenverbindung vormontiert. Ein Kupplungsscheibenfreigang kann über Flexplate-Bleche und Zusatzschrauben eingestellt werden. Alternativ ist es auch möglich, Unterlegscheiben zu verwenden, um die Höhentoleranz im Neuzustand abzugleichen.

Die Betätigung der Kupplung kann beispielsweise über einen modularen Kupplungsaktor (Modular Clutch Actuator, MCA) und verschiedene Leitungen/Bohrungen erfolgen, die durch das Gehäuse bis zum Kolben der Betätigung verlaufen. Das Gehäuse des Hybridmoduls übernimmt also die Funktion einer Distanzhalterung zwischen einer Getriebeglocke und einem Motorblock sowie die Funktion eines Kupplungsbetätigungsgehäuses bzw. Kupplungsnehmerzylindergehäuses (CSC-Gehäuses) mit integrierten Bohrungen/Leitungen für die hydraulische Kupplungsbetätigung.

In einer alternativen Ausführungsform ist es auch möglich, die Funktionen des Gehäuses zu trennen. Dann ist ein Kupplungsnehmerzylinder-Unterzusammenbau direkt an dem Motorblock über die Kurbelwelle befestigt und es werden zusätzliche hydraulische Leitungen an dem Kupplungsnehmerzylindergehäuse und dem Motorblock befestigt. Als Distanzhalterung wird ein Distanzring am Motorblock oder an der Getriebeglocke befestigt. Der Distanzring kann auch integral mit der Getriebeglocke ausgebildet sein, d.h. als eine Verlängerung der Getriebeglocke. Außerdem ist es vorteilhaft, das Getriebe an dem Motorblock zu befestigen. So kann in vorteilhafter Weise das Kupplungsnehmerzylindergehäuse kleiner ausgebildet werden, was sich vorteilhaft auf die Kosten auswirkt.

Bei der Kupplungsbetätigung ergibt sich durch die Steuerung eines hydrostatischen Drucks eine axiale Verschiebung vom Ausrücklager, was die Bewegung der Hebelfedern beeinflusst. Somit wird eine vorzugsweise rund ausgebildete Tellerfeder ausgerückt, die eine notwendige Anpresskraft für die Kupplung bereitstellt, so dass die Kupplung dadurch geöffnet ist. Ein oder mehrere Federelemente, beispielsweise Druckfedern, sorgen für eine notwendige Vorlast, was die Dauerfestigkeit vom Ausrücklager gewährleistet.

Die Hebelfeder besteht aus Einzel-Hebelfedern und einer Halteplatte, die aufgrund der Montagereihenfolge zusammen vernietet werden sollten. Die Montage wird ermöglicht, indem eine Blattfederplatte zusätzlich zu der Anpressplatte verwendet wird, das heißt, dass die Anpressplatte zweiteilig ausgestaltet wird. Alternativ wäre es auch möglich, ein Blattfederpaket zwischen der Anpressplatte an der Riemenscheibe über ein zusätzliches Blech unter der Tellerfeder anzuordnen um den Innenbereich freizuschalten. Somit könnte auch eine einteilige Hebelfeder eingesetzt werden. Die Riemenscheibe für einen Keil- oder einen Zahnriemen oder auch für eine Kette ist mit dem Drehschwingungsdämpfer vormontiert/vorvernietet, so dass eine Wartung der Kupplung und/oder ein Ersatz der Kupplungsscheiben möglich sind. Es wird also ein Hybridmodul bereitgestellt, das modular, bauraumoptimiert und kostengünstig ist.

Die Erfindung wird nachfolgend mit Hilfe von Zeichnungen erläutert. Es zeigen:
- Fig. 1: eine schematische Längsdarstellung eines erfindungsgemäßen Hybridmoduls mit einer geschlossenen (Impuls-)Kupplung,
- Fig. 2: eine schematische Längsdarstellung des Hybridmoduls mit der Kupplung im geöffneten Zustand,
- Fig. 3: eine schematische Längsdarstellung des Hybridmoduls mit der Kupplung im verschleißten Zustand, und
- Fig. 4: eine Frontansicht einer Hebelfeder zum Betätigen der Kupplung.

Die Figuren sind lediglich schematischer Natur und dienen ausschließlich dem Verständnis der Erfindung. Die gleichen Elemente werden mit denselben Bezugszeichen gekennzeichnet.

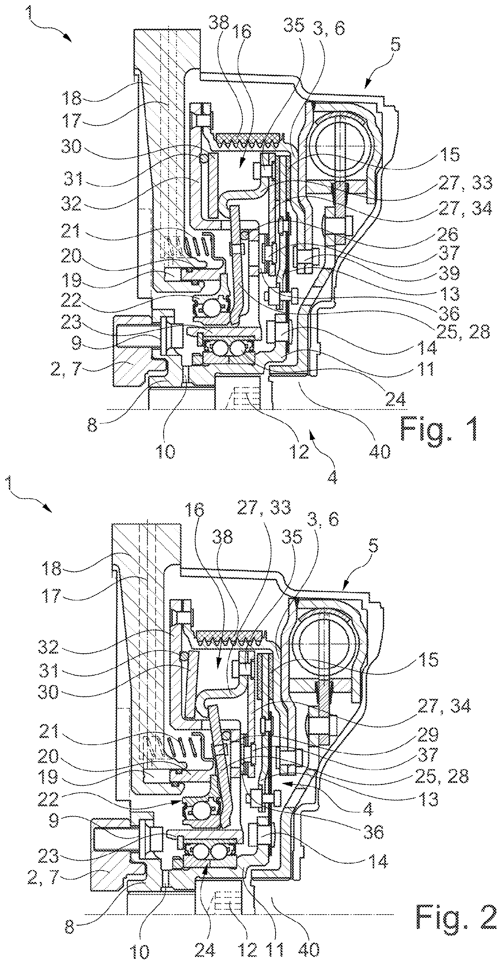

Fig. 1 zeigt ein erfindungsgemäßes Hybridmodul 1 für einen Antriebstrang eines Kraftfahrzeugs. Das Hybridmodul 1 weist ein Drehmomenteingangsbauteil 2 auf, das vorgesehen ist, um von einem nicht dargestellten ersten Antriebsaggregat angetrieben zu werden. Außerdem weist das Hybridmodul 1 ein im Drehmomentenfluss dem Drehmomenteingangsbauteil 2 nachgelagertes, als Abtriebselement wirkendes Drehmomentausgangsbauteil 3 auf. Das Drehmomenteingangsbauteil 2 und das Drehmomentausgangsbauteil 3 sind über eine schaltbare Kupplung 4, die als eine Impulskupplung ausgebildet ist, drehmomentübertragend verbunden.

Das Hybridmodul 1 weist ferner einen Drehschwingungsdämpfer/Torsionsschwingungsdämpfer 5 auf, der zum Reduzieren von Drehungleichförmigkeiten ausgelegt ist. Der Drehschwingungsdämpfer 5 ist der Kupplung 4 im Drehmomentenfluss nachgelagert. Der Drehschwingungsdämpfer 5 ist also im Antriebsstrang getriebeseitig angeordnet, das heißt zwischen dem Drehmomentausgangsbauteil 3 und einem Getriebeeingangsbauteil. Das Drehmomentausgangsbauteil 3 ist als ein koaxial zu dem Drehmomenteingangsbauteil 2 angeordneter Endloszugmittelträger 6 ausgebildet. Der Endloszugmittelträger 6 dient zum Einleiten von Drehmoment eines zweiten Antriebsaggregats, welches achsparallel zu dem Drehmomenteingangsbauteil 2 angeordnet ist.

In dem dargestellten Ausführungsbeispiel wird das Drehmoment, das von dem ersten Antriebsaggregat erzeugt wird, über einen kurbelwellenfestes Bauteil 7, das als das Drehmomenteingangsbauteil 2 dient, in das Hybridmodul 1 eingeleitet. An dem kurbelwellenfesten Bauteil 7 ist ein Adapterbauteil 8 über eine konventionelle Schraubverbindung 9 angebracht. Das Adapterbauteil 8 ist drehmomentübertragend über eine Hirth-Verzahnung 10 mit einem Trägerbauteil 11 verbunden. In Axialrichtung wird das Trägerbauteil 11 relativ zu dem Adapterbauteil 8 über eine Zentralschraube 12 festgelegt. Das Drehmoment wird also von dem kurbelwellenfesten Bauteil 7 an das Adapterbauteil 8 und dann an das Trägerbauteil 11 weitergegeben.

An dem Trägerbauteil 11 ist eine Kupplungsscheibe 13 der schaltbaren Kupplung 4 angebracht. In dieser Ausführungsform ist die Kupplungsscheibe 13 durch eine Nietverbindung 14 an dem Trägerbauteil 11 befestigt. Die Kupplungsscheibe 13 weist Reibbeläge 15, die an der Kupplungsscheibe 13 durch Verkleben befestigt sind.

Zum Betätigen der Kupplung 4 ist ein Kupplungsbetätigungssystem 16 vorhanden. Die Kupplung 4 ist als eine Normally-Closed-Kupplung ausgebildet, die in einer unbetätigten Stellung geschlossen ist und durch ein Betätigen geöffnet wird. Das Kupplungsbetätigungssystem 16 wird hydraulisch betätigt. Dazu sind Leitungen/Bohrungen 17 in einem Gehäuse 18 des Hybridmoduls 1 vorhanden. Durch die Leitungen 17 wird Hydraulikflüssigkeit in einen Druckraum 19 geführt. Durch Beaufschlagen des Druckraums 19 wird ein Kolben 20 des Kupplungsbetätigungssystems 16 in Axialrichtung verschoben. Ferner weist das Kupplungsbetätigungssystem 16 eine Feder 21 auf, die zur Rückstellung des Kolbens 20 ausgelegt ist. Der Kolben 20 ist mit einem Ausrücklager 22 gekoppelt, so dass eine axiale Verschiebung des Kolbens 20 eine axiale Verschiebung des Ausrücklagers 22 erwirkt. Das Ausrücklager 22 ist auf einer Zwischenwelle 23 gelagert, die wiederum über ein Wälzlager 24 auf dem Trägerbauteil 11 gelagert ist.

Außerdem weist das Kupplungsbetätigungssystem 16 eine Hebelfeder 25 auf, die so angeordnet ist, dass sie durch eine axiale Verschiebung des Ausrücklagers 22 verschwenkt wird. Die Hebelfeder 25 liegt in Axialrichtung auf einem Drahtring 26 auf, der als ein Zentrum der Verschwenkung dient. Die Hebelfeder 25 ist so mit einer Anpressplatte 27 gekoppelt, dass eine Verschwenkung der Hebelfeder 25 eine axiale Verschiebung der Anpressplatte 27 hervorruft. Dabei ist die Hebelfeder 25 so angeordnet, dass sie bei einer axialen Verschiebung des Ausrücklagers 22 in eine erste Axialrichtung, die eine Richtung von dem Ausrücklager 22 zu der Kupplungsscheibe 13 hin ist, die Anpressplatte 27 in eine zweite Axialrichtung, die entgegengesetzt zu der ersten Axialrichtung ist, verschiebt, d.h., dass die Anpressplatte 27 bei Betätigung der Kupplung 4 in Axialrichtung von der Kupplungsscheibe 13 weg verschoben wird, so dass die Kupplung 4 geöffnet wird.

Die Hebelfeder 25 ist mehrteilig ausgebildet und weist mehrere Einzel-Hebelfedern 28 auf, die über ein Halteblech 29 miteinander vernietet sind. Die Anpresskraft für die Kupplung 4 wird durch eine runde Tellerfeder 30 bereitgestellt, die über einen Drahtring 31 in Axialrichtung an einem drehmomentausgangsfesten Bauteil 32 gelagert ist. Die Tellerfeder 30 wird durch die axiale Verschiebung der Hebelfeder 25 ausgerückt.

Die Anpressplatte 27 ist mehrteilig ausgebildet. Die Anpressplatte 27 besitzt einen Hebelfederkontaktteil 33, der so ausgebildet ist, dass er in Axialrichtung zwischen der Tellerfeder 20 und der Hebelfeder 25 angeordnet ist. Der Hebelfederkontaktteil 33 hintergreift also die Hebelfeder 25. Auch weist die Anpressplatte 27 einen Reibbelagkontaktteil 34 auf, der so angeordnet ist, dass er beim Schließen der Kupplung 14 den Reibbelage 15 der Kupplungsscheibe 13 kontaktiert. Der Hebelfederkontaktteil 33 und der Reibbelagkontaktteil 34 sind fest miteinander verbunden über einen Niet 35, so dass die Anpresskraft von der Tellerfeder 30 über die Anpressplatte 27 auf die Kupplungsscheibe 13 übertragen wird. Dadurch wird also beim Schließen der Kupplung 4 die Kupplungsscheibe 13 zum Drehmomentübertragen in Reibschluss mit dem Drehmomentausgangsbauteil 3 gebracht. Die Anpressplatte 27 besitzt ein Blattfederpaket 36, das mit dem Reibbelagkontaktteil 34 über einen Niet 37 verbunden ist. Das Blattfederpaket 36 ist ausgelegt, um eine notwendige Vorlast für das Kupplungsbetätigungssystem 16 bereitzustellen und um Verschleiß zu kompensieren.

An dem Endloszugmittelträger 6 ist ein Endloszugmittel 38 zum Einleiten von Drehmoment des achsparallel zu dem Drehmomentausgangsbauteil 3 und zu dem Drehmomenteingangsbauteil 2 angeordneten zweiten Antriebsaggregats angebunden. Das Drehmomentausgangsbauteil 3 ist unter Ausbildung einer Befestigungsstelle über einen Niet 39 mit dem Drehschwingungsdämpfer 5 verbunden. Der Drehschwingungsdämpfer 5 und das Drehmomentausgangsbauteil 3 sind vorvernietet. Der Drehschwingungsdämpfer 5 wiederum ist mit einem Getriebeeingangsbauteil 40, insbesondere einer Doppelkupplung, an einem Getriebe angebunden. Dabei ist der Drehschwingungsdämpfer 5 zum zentrumsnahen Befestigen an dem Getriebeeingangsbauteil 40 vorgesehen, d.h. radial innerhalb der Kupplungsscheibe 13 und/oder der Hebelfeder 25 und/oder des Drehmomentausgangsbauteils 3 angeordnet.

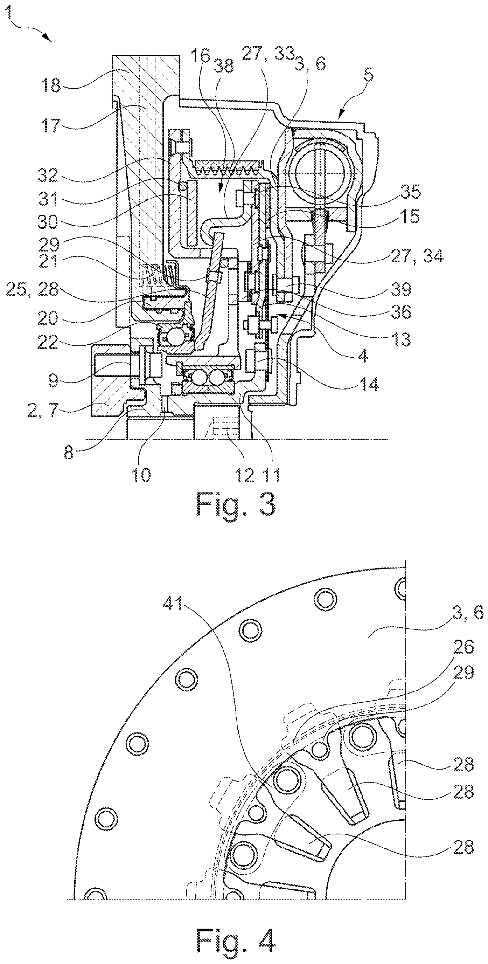

Fig. 1 zeigt das Hybridmodul 1 mit der Kupplung 4 im unverschlissenen Zustand in geschlossener, d.h. unbetätigter, Stellung, während Fig. 2 das Hybridmodul 1 mit der Kupplung 4 im unverschlissenen Zustand in geöffneter, d.h. betätigter, Stellung zeigt. Fig. 3 zeigt das Hybridmodul 1 mit der Kupplung 4 im verschlissenen Zustand in geschlossener Stellung. Durch das Blattfederpaket 36 wird der Verschleiß der Reibbeläge 15 kompensiert.

Fig. 4 zeigt eine Frontansicht der Kupplung 4, in der zu erkennen ist, dass die Einzel-Hebelfedern 28 mit der Halteplatte 29 zu der Hebelfeder 25 vernietet sind. Fig. 4 zeigt auch mehrere Blattfederpaket 36, die jeweils mehrere Einzel-Blattfedern 41 aufweisen, welche miteinander zu einem Blattfederpaket 36 vernietet sind.

### Bezugszeichenliste

1 Hybridmodul
2 Drehmomenteingangsbauteil
3 Drehmomentausgangsbauteil
4 Kupplung
5 Drehschwingungsdämpfer
6 Endloszugmittelträger
7 kurbelwellenfestes Bauteil
8 Adapterbauteil
9 Schraubverbindung
10 Hirth-Verzahnung
11 Trägerbauteil
12 Zentralschraube
13 Kupplungsscheibe
14 Nietverbindung
15 Reibbelag
16 Kupplungsbetätigungssystem
17 Leitung/Bohrung
18 Gehäuse
19 Druckraum
20 Kolben
21 Feder
22 Ausrücklager
23 Zwischenwelle
24 Wälzlager
25 Hebelfeder
26 Drahtring
27 Anpressplatte
28 Einzel-Hebelfeder
29 Halteplatte
30 Tellerfeder
31 Drahtring
32 drehmomentausgangsfestes Bauteil
33 Hebelfederkontaktteil
34 Reibbelagkontaktteil
35 Niet
36 Blattfederpaket
37 Niet
38 Endloszugmittel
39 Niet
40 Getriebeeingangsbauteil
41 Einzel-Blattfeder

## Patentansprüche

1. Hybridmodul (1) für einen Antriebsstrang eines Kraftfahrzeugs, wobei das Hybridmodul (1) aufweist:
ein Drehmomenteingangsbauteil (2), das vorgesehen ist, um von einem ersten Antriebsaggregat angetrieben zu werden,
ein in einem Drehmomentenfluss dem Drehmomenteingangsbauteil (2) nachgelagertes als Abtriebselement wirkendes Drehmomentausgangsbauteil (3), das als ein koaxial zu dem Drehmomenteingangsbauteil (2) angeordneter Endloszugmittelträger (6) zum Einleiten von Drehmoment eines zweiten Antriebsaggregats ausgebildet ist, das achsparallel zu dem Drehmomenteingangsbauteil (2) angeordnet ist,
eine schaltbare Kupplung (4), über die das Drehmomenteingangsbauteil (2) und das Drehmomentausgangsbauteil (3) drehmomentübertragend verbindbar sind, und
einen Drehschwingungsdämpfer (5) zum Reduzieren von Drehungleichförmigkeiten,
**dadurch gekennzeichnet, dass**
der Drehschwingungsdämpfer (5) der schaltbaren Kupplung (4) in dem Drehmomentenfluss nachgelagert ist, und der Endloszugmittelträger (6) miteinander unter Ausbildung einer Befestigungsstelle in Kontakt stehen.

2. Hybridmodul (1) nach Anspruch 1, **dadurch gekennzeichnet, dass** ein Kupplungsbetätigungssystem (16) zum Betätigen der schaltbaren Kupplung (4) vorhanden ist, das eine schwenkbare Hebelfeder (25) besitzt, mittels der ein Verstellen der schaltbaren Kupplung (4) bewirkbar ist, wobei die Hebelfeder (25) mehrteilig ausgebildet ist.

3. Hybridmodul (1) nach Anspruch 1 oder 2, **dadurch gekennzeichnet, dass** die schaltbare Kupplung (4) zumindest eine Kupplungsscheibe (13) aufweist, die über ein Adapterbauteil (8) mit den Drehmomenteingangsbauteil (2) verbunden ist.

4. Hybridmodul (1) nach Anspruch 3, **dadurch gekennzeichnet, dass** das Adapterbauteil (8) über ein Trägerbauteil (11) mit der Kupplungsscheibe (13) verbunden ist, wobei das Adapterbauteil (8) und das Trägerbauteil (11) über eine formschlüssige Verbindung (10) zur Drehmomentübertragung verbunden sind.

5. Hybridmodul (1) nach Anspruch 4, **dadurch gekennzeichnet, dass** die formschlüssige Verbindung (11) als eine Hirth-Verzahnung (11) ausgebildet ist.

6. Hybridmodul (1) nach einem der Ansprüche 1 bis 5, **dadurch gekennzeichnet, dass** eine Anpressplatte (27) zum Betätigen der Kupplung (4) mehrteilig ausgebildet ist.

7. Hybridmodul (1) nach einem der Ansprüche 1 bis 6, **dadurch gekennzeichnet, dass** der Drehschwingungsdämpfer (5) zum zentrumsnahen Befestigen an einem Getriebeeingangsbauteil (40) vorgesehen ist.

8. Antriebsstrang für ein Kraftfahrzeug, mit einem ersten Antriebsaggregat, dessen Abtriebswelle über ein Hybridmodul (1) nach einem der Ansprüche 1 bis 7 mit einem Endloszugmittelträger (6) verbunden ist, wobei der Endloszugmittelträger (6) über ein Endloszugmittel (38) mit einem achsparallel zu dem Endloszugmittelträger (6) und/oder der Abtriebswelle des erstes Antriebsaggregats angeordneten zweiten Antriebsaggregat drehmomentübertragend gekoppelt ist, wobei ein Drehschwingungsdämpfer (5) des Hybridmoduls (1) mit einem Getriebeeingangsbauteil (40) an einem Getriebe angebunden ist, sowie mit einer Doppelkupplung,.

9. Antriebsstrang nach Anspruch 8, **dadurch gekennzeichnet, dass** der Drehschwingungsdämpfer (5) zwischen dem Hybridmodul (1) und der Doppelkupplung angeordnet ist.

## Claims

1. A hybrid module (1) for a drive train of a motor vehicle, wherein the hybrid module (1) has:
a torque input component (2) which is provided in order to be driven by a first drive unit,
a torque output component (3) that is mounted downstream of the torque input component (2) in the torque flow and acts as an output element and is designed as a continuous traction means carrier (6) arranged coaxially to the torque input component (2) for introducing torque of a second drive unit that is arranged axially parallel to the torque input component (2),
a switchable clutch (4), via which the torque input component (2) and the torque output component (3) can be connected in a torque-transmitting manner, and a torsional vibration damper (5) for reducing torsional irregularities,
**characterised in that**
the torsional vibration damper (5), which is mounted downstream of the switchable clutch (4) in the torque flow, and the continuous traction means carriers (6) are in contact with one other, forming an attachment point.

2. The hybrid module (1) according to claim 1, **characterised in that** a clutch actuation system (16) for actuating the switchable clutch (4) is provided, having a pivotable lever spring (25), by means of which an adjustment of the switchable clutch (4) can be performed, wherein the lever spring (25) is designed in several parts.

3. The hybrid module (1) according to claim 1 or 2, **characterised in that** the switchable clutch (4) has at least one clutch disc (13), which is connected to the torque input component (2) via an adapter component (8).

4. The hybrid module (1) according to claim 3, **characterised in that** the adapter component (8) is connected to the clutch disc (13) via a carrier component (11), wherein the adapter component (8) and the carrier component (11) are connected in a torque-transmitting manner via a form-fitting connection (10).

5. The hybrid module (1) according to claim 4, **characterised in that** the form-fitting connection (11) is designed as a toothed Hirth coupling (11).

6. The hybrid module (1) according to any one of claims 1 to 5, **characterised in that** a pressure plate (27) for actuating the clutch (4) is designed in several parts.

7. The hybrid module (1) according to any one of claims 1 to 6, **characterised in that** the torsional vibration damper (5) is provided for fastening close to the centre on a transmission input component (40).

8. A drive train for a motor vehicle, having a first drive unit, the output shaft of which can be connected to a continuous traction means carrier (6) by means of a hybrid module (1) according to any one of claims 1 to 7, wherein the continuous traction means carrier (6) is coupled via continuous traction means (38) in a torque-transmitting manner to a second drive unit which is arranged axially parallel to the continuous traction means carrier (6) and/or to the output shaft of the first drive unit, wherein a torsional vibration damper (5) of the hybrid module (1) is connected to a transmission input component (40) on a transmission, and to a double clutch.

9. The drive train according to claim 8, **characterised in that** the torsional vibration damper (5) is arranged between the hybrid module (1) and the double clutch.

## Revendications

1. Module hybride (1) pour un groupe motopropulseur d'un véhicule automobile, le module hybride (1) présentant :
un élément d'entrée de couple (2) qui est prévu pour être entraîné par un premier groupe d'entraînement,
un élément de sortie de couple (3), placé en aval de l'élément d'entrée de couple (2) dans un flux de couple et agissant comme élément de sortie, qui est conçu comme un support de moyen de traction sans fin (6) agencé coaxialement à l'élément d'entrée de couple (2) pour introduire le couple d'un deuxième groupe d'entraînement qui est agencé parallèlement à l'axe de l'élément d'entrée de couple (2),
un embrayage commutable (4), par l'intermédiaire duquel l'élément d'entrée de couple (2) et l'élément de sortie de couple (3) peuvent être raccordés de manière à transmettre le couple, et un amortisseur de vibrations de torsion (5) pour réduire les irrégularités de torsion,
**caractérisé en ce que**
l'amortisseur de vibrations de torsion (5) est placé en aval de l'embrayage commutable (4) dans le flux de couple et lui et le support de moyen de traction sans fin (6) sont en contact l'un avec l'autre en formant un point de fixation.

2. Module hybride (1) selon la revendication 1, **caractérisé en ce qu'**il existe un système d'actionnement d'embrayage (16) pour actionner l'embrayage commutable (4), qui possède un ressort de levier (25) pivotant, au moyen duquel un réglage de l'embrayage commutable (4) peut être effectué, le ressort de levier (25) étant conçu en plusieurs parties.

3. Module hybride (1) selon la revendication 1 ou 2, **caractérisé en ce que** l'embrayage commutable (4) présente au moins un disque d'embrayage (13) qui est raccordé à l'élément d'entrée de couple (2) par l'intermédiaire d'un élément adaptateur (8).

4. Module hybride (1) selon la revendication 3, **caractérisé en ce que** l'élément adaptateur (8) est raccordé au disque d'embrayage (13) par l'intermédiaire d'un élément de support (11), l'élément adaptateur (8) et l'élément de support (11) étant raccordés par l'intermédiaire d'une liaison par complémentarité de forme (10) pour la transmission du couple.

5. Module hybride (1) selon la revendication 4, **caractérisé en ce que** la liaison par complémentarité de forme (11) est conçue sous la forme d'une denture Hirth (11).

6. Module hybride (1) selon l'une des revendications 1 à 5, **caractérisé en ce qu'**un plateau de pression (27) est conçu en plusieurs parties pour actionner l'embrayage (4).

7. Module hybride (1) selon l'une des revendications 1 à 6, **caractérisé en ce que** l'amortisseur de vibrations de torsion (5) est prévu pour être fixé à proximité du centre sur un élément d'entrée de réducteur (40).

8. Groupe motopropulseur pour un véhicule automobile, comprenant un premier groupe d'entraînement, dont l'arbre de sortie est raccordé à un support de moyen de traction sans fin (6) par l'intermédiaire d'un module hybride (1) selon l'une des revendications 1 à 7, le support de moyen de traction sans fin (6) étant accouplé, par l'intermédiaire d'un moyen de traction sans fin (38), à un deuxième groupe d'entraînement agencé parallèlement à l'axe du support de moyen de traction sans fin (6) et/ou à l'arbre de sortie du premier groupe d'entraînement, en transmettant le couple, un amortisseur de vibrations de torsion (5) du module hybride (1) étant raccordé à une boîte de vitesse par un élément d'entrée de réducteur (40), ainsi qu'à un double embrayage.

9. Groupe motopropulseur selon la revendication 8, **caractérisé en ce que** l'amortisseur de vibrations de torsion (5) est agencé entre le module hybride (1) et l'embrayage double.
